# EUROPÄISCHE PATENTSCHRIFT

(11) **EP 1 736 443 B1**
(45) Veröffentlichungstag und Bekanntmachung des Hinweises auf die Patenterteilung: **14.11.2007**
(21) Anmeldenummer: 06007342.6
(22) Anmeldetag: 07.04.2006
(51) Int. Cl.: C02F 3/00, C02F 3/14, C02F 3/20

(54) **Klärvorrichtung**
Wastewater treatment plant
Station d'épuration

(30) Priorität: 22.06.2005 DE 102005028764
(43) Veröffentlichungstag der Anmeldung: 27.12.2006
(73) Patentinhaber: ATB Umwelttechnologien GmbH, 32457 Porta Westfalica (DE)
(72) Erfinder: Baumann, Markus, 32602 Vlotho (DE)
(74) Vertreter: Steinmeister, Helmut

(56) Entgegenhaltungen:
- DE-A1- 10 240 804
- US-A- 3 530 990
- US-B1- 6 585 886
- PATENT ABSTRACTS OF JAPAN Bd. 007, Nr. 151 (C-174), 1. Juli 1983 (1983-07-01) & JP 58 064192 A (EBARA SEISAKUSHO KK), 16. April 1983 (1983-04-16)

## Beschreibung

Die Erfindung betrifft eine Klärvorrichtung mit einem Klärbehälter zur Aufnahme von zu klärendem Abwasser, einem in das Abwasser im Klärbehälter eintauchenden Belüftungsschlauch, einem als Füllstandsmesser dienenden Schwimmerschalter im Klärbehälter sowie einer von dem Schwimmerschalter steuerbaren Pumpe im Klärbehälter.

Klärvorrichtungen mit den eingangs genannten Bestandteilen sind in verschiedenen Ausführungsformen bekannt. Die verwendeten Klärbehälter sind im allgemeinen Mehrkammerbehälter und das übliche Verfahren ist ein voll biologisches Belebtschlammverfahren. Auf diese Einzelheiten soll es jedoch im vorliegenden Zusammenhang nicht ankommen, so dass die Erfindung für grundsätzliche beliebige Klärverfahren anwendbar ist, die einen Füllstandsmesser zur Ermittlung des Füllstands des Klärbehälters benötigen und einen in den Klärbehälter eintretenden, in das Abwasser eintauchenden Belüftungsschlauch aufweisen.

Zur Ermittlung des Füllstandes befinden sich üblicherweise Schwimmerschalter in dem Klärbehälter (siehe zum Beispiel US 6 585 886).

Als Schwimmerschalter werden beispielsweise Quecksilberschalter verwendet, die die Form eines Paddels haben können, das durch aufsteigendes Wasser in eine waagerechte Lage gekippt wird, bei der es zu einem Schaltimpuls kommt, oder auch Reedschalter, die kapazitiv, induktiv oder in anderer Weise arbeiten und das Auf und Ab eines Schwimmerkörpers abtasten. Auf die Art des Schwimmerschalters soll es hier nicht ankommen.

Die verwendeten Schwimmerschalter sind üblicherweise im Klärbehälter in einem Bereich angeordnet, der von dem aufsteigenden und absinkenden Klärwasser erreicht wird. Dieser Bereich, in dem sich der Klärwasserspiegel aufwärts und abwärts bewegt, enthält üblicherweise größere Mengen an Schmutz, insbesondere an schwimmfähigen Verunreinigungen im Klärwasser, die zur Oberfläche auftreiben und sich im Bereich des Wasserspiegels sammeln.

Diese Verunreinigungen setzen sich an den Innenwänden des Klärbehälters und naturgemäß auch an einem in entsprechender Höhe angeordneten Schwimmerschalter ab. Die dadurch entstehende Verschmutzung kann schließlich dazu führen, dass der Schwimmerkörper nicht mehr ausreichend beweglich ist und sich festsetzt. Damit ist die Funktion einer Füllstandsmessung außer Kraft gesetzt.

Der Erfindung liegt daher die Aufgabe zugrunde, einen Schwimmerschalter in einem Klärbehälter derart anzuordnen, dass die Verschmutzung und damit die Funktionsbeeinträchtigung des Schwimmerschalters in möglichst engen Grenzen gehalten werden.

Zur Lösung dieser Aufgabe ist die erfindungsgemäße Klärvorrichtung dadurch gekennzeichnet, dass der Schwimmerschalter im Belüftungsschlauch angeordnet ist.

In dem in das Klärwasser eintauchenden Belüftungsschlauch stellt sich ebenfalls der im gesamten Klärbehälter geltenden Wasserspiegel ein, so dass eine Füllstandsmessung im Belüftungsschlauch als Füllstandsmessung für den Klärbehälter insgesamt betrachtet werden kann. Innerhalb des Belüftungsschlauches ist die Verschmutzung wesentlich geringer als außerhalb des Belüftungsschlauches im Klärbehälter. Dies beruht zum einen darauf, dass während der Belüftungsphasen ein Luftstrom herrscht, der das Klärwasser im Belüftungsschlauch in Bewegung hält und ein Absetzen des Schmutzes verhindert. Zum anderen kann Schmutz in den Belüftungsschlauch allenfalls über den Belüfter eindringen, der eine Engstelle oder Schmutzbarriere bildet und im übrigen während der Belüftungsphasen stets wieder freigesaugt wird.

Im folgenden werden bevorzugte Ausführungsbeispiele der Erfindung anhand der beigefügten Zeichnung näher erläutert.
- Fig. 1: zeigt schematisch den Verlauf eines zu einer Belüftungspumpe geführten Belüftungsschlauches;
- Fig. 2: zeigt einen im wesentlichen senkrecht verlaufenden Abschnitt des Belüftungsschlauches in dem unterhalb des Wasserspiegels des Abwassers liegenden Bereich.

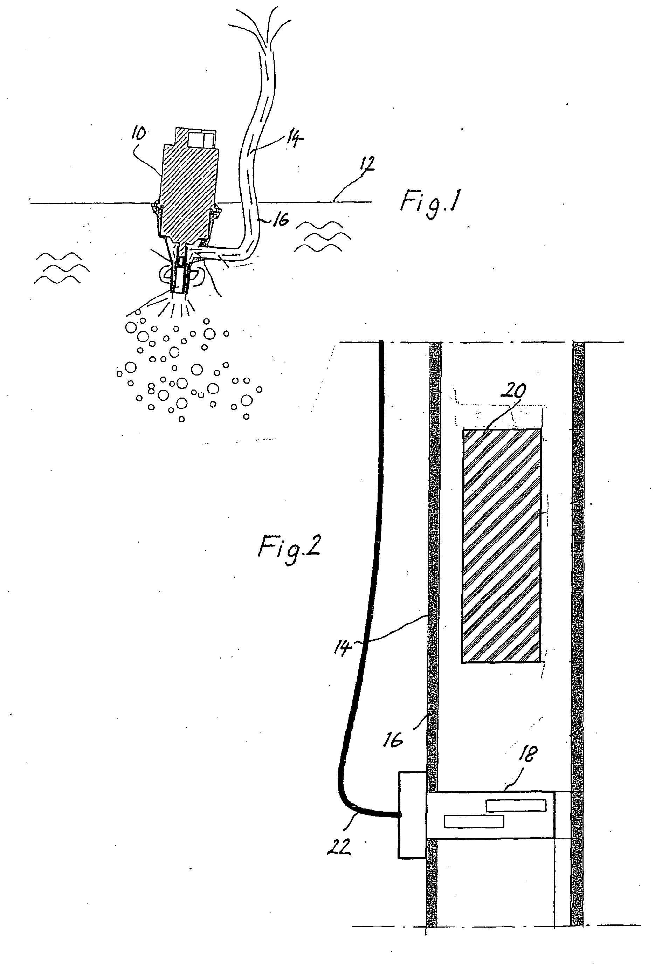

Fig. 1 zeigt eine Belüftungspumpe 10, die bei dem dargestellten Beispiel wenigstens teilweise in das Abwasser innerhalb eines nicht dargestellten Abwasserbehälters oder Klärbehälters eintaucht. Der Wasserspiegel des Abwassers ist mit 12 bezeichnet. Auf die Art der Belüftungspumpe, die in der dargestellten Weise in das Abwasser nur teilweise eintauchen kann oder auch am Boden des Klärbehälters angeordnet sein kann, kommt es hier nicht an, sondern lediglich darauf, dass ein Belüftungsschlauch 14 von außerhalb, insbesondere außerhalb des Klärbehälters bis zu der Belüftungspumpe in einer Position unterhalb des Wasserspiegels 12 geführt ist. Der Belüftungsschlauch 14 weist zumindest einen Teilabschnitt 16 auf, der im wesentlichen senkrecht verläuft und unterhalb des Wasserspiegels 12 liegt. In einem derartigen Bereich 16 soll erfindungsgemäß ein Schwimmerschalter angeordnet werden, da in diesem Bereich aufgrund des Auf und Ab des Wasserspiegels 12 und des wiederholt von oben eintretenden Luftstroms erhebliche Bewegung herrscht, so dass es hier relativ unwahrscheinlich ist, dass sich in störender Weise grö-ßere Mengen Schmutz an dem Schwimmerschalter und seinen Bestandteilen absetzen.

Fig. 2 zeigt schematisch den Abschnitt 16 des Belüftungsschlauches 14. In den Belüftungsschlauch ist von der Seite her durch eine nicht bezeichnete Öffnung ein Reedschalter 18 eingefügt, der im wesentlichen den Querschnitt des Belüftungsschlauches überbrückt. Oberhalb des Reedschalters 18 befindet sich innerhalb des Belüftungsschlauches 14 ein Schwimmerkörper 20. Der Reedschalter 18 ist so angeordnet, dass der Schwimmerkörper 20 bei niedrigstem Wasserspiegel gegen den Reedschalter 18 trifft. Der Reedschalter 18 meldet das Auftreffen des Schwimmerkörpers 20 über eine Steuerleitung 22.

Die Anordnung des Reedschalters 18 und des Schwimmerkörpers 20 ist lediglich als Beispiel zu verstehen.

Es kommt weder auf die Funktion des Reedschalters 18 an, der kapazitiv, induktiv oder in anderer Weise wirken kann, der aber auch auf die Schwerkraftwirkung reagieren kann, die durch den absinkenden Schwimmerkörper 20 erzeugt wird.

## Patentansprüche

1. Klärvorrichtung mit einem Klärbehälter zur Aufnahme von zu klärendem Abwasser, einem in das Abwasser im Klärbehälter eintauchenden Belüftungsschlauch, einem als Füllstandsmesser dienenden Schwimmerschalter im Klärbehälter sowie einer von dem Schwimmerschalter steuerbaren Pumpe im Klärbehälter, **dadurch gekennzeichnet, dass** der Schwimmerschalter (18,20) im Belüftungsschlauch (14) angeordnet ist.

2. Klärvorrichtung nach Anspruch 1, **dadurch gekennzeichnet, dass** der Schwimmerschalter (18,20) einen Reedschalter (18) umfaßt.

3. Klärvorrichtung nach Anspruch 1 oder 2, **dadurch gekennzeichnet, dass** der Schwimmerschalter (18,20) in einem im wesentlichen senkrecht verlaufenden Abschnitt (16) des Belüftungsschlauchs (14) angeordnet ist.

## Claims

1. Clarification device having a clarification container for receiving waste water to be clarified, a ventilation pipe which is immersed in the waste water in the clarification container, a float switch acting as a filling level measurement means in the clarification container and a pump which can be controlled by the float switch in the clarification container, **characterised in that** the float switch (18, 20) is arranged in the ventilation pipe (14).

2. Clarification device according to claim 1, **characterised in that** the float switch (18, 20) comprises a reed switch (18).

3. Clarification device according to claim 1 or 2, **characterised in that** the float switch (18, 20) is arranged in a substantially vertically extending portion (16) of the ventilation pipe (14).

## Revendications

1. Dispositif d'épuration comportant un bassin d'épuration pour recevoir les eaux usées à clarifier, un tuyau d'aération plongeant dans les eaux usées du bassin d'épuration, un interrupteur à flotteur dans le bassin d'épuration, servant de dispositif de mesure de niveau ainsi qu'une pompe pouvant être commandée par l'interrupteur à flotteur, dans le bassin d'épuration, **caractérisé en ce que** l'interrupteur à flotteur (18, 20) est disposé dans le tuyau d'aération (14).

2. Dispositif d'épuration selon la revendication 1, **caractérisé en ce que** l'interrupteur à flotteur (18, 20) comprend un interrupteur Reed (18).

3. Dispositif d'épuration selon la revendication 1 ou 2, **caractérisé en ce que** l'interrupteur à flotteur (18, 20) est disposé dans un segment (16) s'étendant sensiblement verticalement du tuyau de ventilation (14).
